# EUROPEAN PATENT APPLICATION

(11) **EP 1 523 007 A2**
(43) Date of publication of application: **13.04.2005**
(21) Application number: 04023900.6
(22) Date of filing: 07.10.2004
(51) Int. Cl.: G11B 23/03

(54) **Disc cartridge**

(30) Priority: 08.10.2003 JP 2003349761
(71) Applicant: Fuji Photo Film Co., Ltd., Kanagawa (JP)
(72) Inventor: Shiga, Hideaki, Odawara-shi Kanagawa (JP)
(74) Representative: HOFFMANN - EITLE

(57) **Abstract**

A disc cartridge is loadable at a drive device and accommodates a disc at which information is replayed/recorded by laser light of the drive device. The disc cartridge includes a case, a shutter and a disc retention member. The case rotatably accommodates the disc, a disc extraction aperture is formed in the case, and the case includes an aperture portion which enables irradiation of the laser on a recording face of the disc. The shutter is disposed to face the recording face of the disc in the case, and slides to open and close the aperture portion. The disc retention member pushes the disc against the shutter and retains the disc. The shutter is formed such that a center thereof has a recessed form relative to the recording face of the disc.

## Description

### BACKGROUND OF THE INVENTION

### Field of the Invention

The present invention relates to a disc cartridge which accommodates a disc, which serves as a recording medium, in a case. More specifically, the present invention relates to a disc cartridge at which an aperture for extraction of the disc is formed in a surface of the case.

### Description of the Related Art

Among disc cartridges, there are cartridges at which, in order to reduce thickness and enable extraction of the disc, a circular aperture is formed in an upper shell, which covers an non-recording face (label face) of the disc, and the aperture exposes the non-recording face side of the disc.

With such a disc cartridge, it is easy for dust to ingress through the aperture. Therefore, proposals have been made to retain and fix the disc such that dust will not adhere to a recording face of the disc. For example, conventional disc cartridges include a cartridge in which, in a state of retention of the disc, the disc is pressed in a thickness direction and the recording face is caused to make surface contact with a sheet or shutter inside the case, and other similar cartridges (see, for example, Japanese Patent Application Laid-Open (JP-A) No. 2003-228948).

However, if the recording face of a disc is put into surface contact and retained in a case or the like, at times of, for example, slight vibrations during transportation or of loading/unloading of the disc cartridge at a drive device, the disc and the shutter will rub together, which is likely to cause damage to the recording face of the disc.

### SUMMARY OF THE INVENTION

In consideration of the circumstances described above, an object of the present invention is to provide a disc cartridge capable of preventing a recording face of a disc from being damaged.

A first aspect of the present invention provides a disc cartridge which is loadable at a drive device and which accommodates a disc at which information is at least one of replayed and recorded by laser light of the drive device is provided, the disc cartridge including: a case which rotatably accommodates the disc, an aperture for extraction of the disc being formed in the case, and the case including an aperture portion which enables irradiation of the laser light on a recording face of the disc; a shutter disposed to face the recording face of the disc in the case, the shutter sliding to open and close the aperture portion; and a disc retention member which pushes the disc against the shutter for retaining the disc, wherein the shutter is formed such that a center thereof includes a recessed form relative to the recording face of the disc.

According to the disc cartridge of the structure described above, the case rotatably accommodates the disc. The aperture portion, which enables irradiation of the laser light on a recording surface of the disc, is formed in the case. This aperture is opened and closed by the shutter sliding when the disc cartridge is loaded at a drive device. On the other hand, when the disc cartridge is not in use, the disc retention portion pushes the disc against the shutter and retains the disc. The shutter is depressedly formed in a bowl shape whose center is recessed with respect to the recording face of the disc. Therefore, at times of disc retention, rather than the whole of the recording face of the disc making surface contact, only an outer peripheral portion of the disc (which portion is not used as a recording region) makes contact with an outer peripheral portion of the shutter. Consequently, most of the recording face is in a non-contact state, and damage to the recording face can be prevented.

In the first aspect, the recording face of the disc may be curved in a recessed form along radial directions from a center thereof.

The recording face of the disc is curved in the recessed form along the radial directions from the center thereof. Therefore, in the state in which the disc is retained at times of non-use of the disc cartridge, rather than almost all of the recording face of the disc making surface contact with the shutter or the like (or in a case in which another member is provided between the disc and the shutter, that other member), only the outer peripheral portion of the disc makes contact. Therefore, most of the recording face is in a non-contact state, and damage to the recording face can be avoided.

Further, the disc may include a center hole at a central portion thereof, and the recording face of the disc may include a protrusion-form stack rib at a non-recording region at an outer periphery portion of the center hole.

Because the recording face of the disc features the protrusion-form stack rib at the non-recording region, in the state in which the disc is retained at times of non-use of the disc cartridge, rather than almost all of the disc recording face making surface contact with the shutter (or in a case in which another member is provided between the disc and the shutter, that other member), only the stack rib of the disc makes contact. Therefore, a recording region of the recording face is in a non-contact state, and damage to the recording region of the recording face can be prevented.

Furthermore, the case may be formed by an upper shell and a lower shell, and an outer edge portion of the inside of the lower shell may include a retention portion for supporting an outer peripheral portion of the disc.

In the state in which the disc is retained at times of non-use of the disc cartridge, the protrusion portion of the lower shell supports the outer peripheral portion of the disc. Hence, most of the recording face is in a non-contact state, and damage to the recording face can be prevented.

Moreover, an outer peripheral portion of the shutter may include a retention portion for retaining an outer peripheral portion of the disc. In such a case, the disc may include a center hole at a central portion thereof, and the shutter may further include a retention portion at a central portion thereof, which retention portion is formed by a protrusion portion and supports an outer periphery portion of the center hole of the disc.

The protrusion portions are formed at the outer peripheral portion and/or the central portion of the shutter, to support the outer peripheral portion of the disc and/or the outer peripheral portion of the center hole. Consequently, in the state in which the disc is retained at times of non-use of the disc cartridge, rather than the whole of the recording face of the disc making surface contact, the outer peripheral portion of the disc and the outer peripheral portion of the center hole are supported by the protrusion portions of the shutter (at the outer peripheral portion and central portion thereof). Thus, most of the recording face is in a non-contact state, and damage to the recording face can be prevented.

A second aspect of the present invention provides a disc cartridge which is loadable at a drive device and which accommodates a disc at which information is at least one of replayed and recorded by laser light of the drive device is provided, the disc cartridge including: a case which rotatably accommodates the disc, an aperture for extraction of the disc being formed in the case, and the case including a first aperture portion which enables irradiation of the laser light on a recording face of the disc; an inner rotor rotatably accommodated in the case, a second aperture portion with substantially the same size as the first aperture portion being formed in the inner rotor; a shutter which is supported to be swingable at a shaft from the inner rotor for opening and closing the first aperture portion and the second aperture portion; a cam groove formed in the shutter; a guide protrusion formed at a floor face of the case, the guide protrusion engaging with the cam groove, and the shutter being swung around the shaft by an operation of rotation of the inner rotor; and a disc retention member which pushes the disc against the inner rotor for retaining the disc, wherein the inner rotor is formed such that a center thereof includes a recessed form relative to the recording face of the disc.

According to the disc cartridge of the structure described above, the case rotatably accommodates the disc. The first aperture portion, which enables irradiation of the laser light on a recording surface of the disc, is formed in the case. The shutter is supported to be swingable at the shaft to the inner rotor, and opens and closes the first aperture portion and the second aperture portion, which is formed in the inner rotor. Thus, when the disc cartridge is loaded at a drive device, the inner rotor rotates and causes the shaft to move, the shutter is guided by the cam groove engaged with the guide protrusion, and the shutter swings around the shaft to open/close the first aperture portion and the second aperture portion. On the other hand, when the cartridge is not in use, the disc retention portion presses the disc toward the inner rotor and retains the disc. The inner rotor is depressedly formed in a bowl shape whose center is recessed with respect to the recording face of the disc. Consequently, rather than the whole recording face of the disc making surface contact at times of disc retention, only an outer peripheral portion of the disc makes contact with an outer peripheral portion of the inner rotor. Therefore, most of the recording face is in a non-contact state, and damage to the recording face can be avoided.

In the second aspect, the recording face of the disc may be curved in a recessed form along radial directions from a center thereof.

The recording face of the disc is curved in the recessed form in radial directions from the center thereof. Therefore, in the state in which the disc is retained at times of non-use of the disc cartridge, rather than almost all of the recording face of the disc making surface contact with the inner rotor or the like (or in a case in which another member is provided between the disc and the inner rotor, that other member), only the outer peripheral portion of the disc makes contact. Therefore, most of the recording face is in a non-contact state, and damage to the recording face can be prevented.

Further, the disc may include a center hole at a central portion thereof, and the recording face of the disc may include a protrusion-form stack rib at a non-recording region at an outer periphery portion of the center hole.

Because the recording face of the disc features the protrusion-form stack rib at a non-recording region, in the state in which the disc is retained at times of non-use of the disc cartridge, rather than almost all of the disc recording face making surface contact with the inner rotor (or in a case in which another member is provided between the disc and the inner rotor, that other member), only the stack rib of the disc makes contact. Therefore, a recording region of the recording face is in a non-contact state, and damage to the recording region of the recording face can be avoided.

Furthermore, an outer peripheral portion of the inner rotor may include a retention portion for retaining an outer peripheral portion of the disc. In such a case, the disc may include a center hole at a central portion thereof, and the inner rotor may further include a retention portion at a central portion thereof, which retention portion is formed by a protrusion portion and supports an outer periphery portion of the center hole of the disc.

The protrusion portions are formed at the outer peripheral portion and/or the central portion of the inner rotor, to support the outer peripheral portion of the disc and/or the outer peripheral portion of the center hole. Consequently, in the state in which the disc is retained at times of non-use of the disc cartridge, rather than the whole of the recording face of the disc making surface contact, the outer peripheral portion of the disc and the outer peripheral portion of the center hole are supported by the protrusion portions of the inner rotor (at the outer peripheral portion and central portion thereof). Thus, most of the recording face is in a non-contact state, and damage to the recording face can avoided.

A third aspect of the present invention provides a disc cartridge which is loadable at a drive device and which accommodates a disc at which information is at least one of replayed and recorded by laser light of the drive device is provided, the disc cartridge including: a case which rotatably accommodates the disc, an aperture for extraction of the disc being formed in the case, and the case including a first aperture portion which enables irradiation of the laser light on a recording face of the disc; a shutter mechanism disposed to face the recording face of the disc in the case, the shutter mechanism opening and closing the first aperture portion; and a disc retention member which pushes the disc against the shutter mechanism for retaining the disc, wherein the shutter mechanism is formed such that a central portion thereof is spaced apart from the recording face of the disc.

A fourth aspect of the present invention provides a method for retaining a disc in a disc cartridge that includes: a case which is loadable at a drive device, rotatably accommodates the disc, at which disc information is at least one of replayed and recorded by laser light of the drive device, and includes an aperture portion which enables irradiation of the laser light on a recording face of the disc; a shutter mechanism disposed to face the recording face of the disc in the case, the shutter mechanism opening and closing the aperture portion; and a disc retention member which pushes the disc against the shutter mechanism for retaining the disc, the method including: closing the aperture portion with the shutter mechanism; and abutting an outer peripheral portion of the shutter mechanism against an outer peripheral portion of the disc for retaining the disc.

### BRIEF DESCRIPTION OF THE DRAWINGS

Fig. 1 is an exploded perspective view showing a disc cartridge relating to a first embodiment of the present invention.
Fig. 2 is a sectional view showing a state in which a disc retention portion of the disc cartridge of Fig. 1 retains an optical disc.
Fig. 3 is a sectional view showing a state in which the disc retention portion of the disc cartridge of Fig. 1 has released the optical disc.
Fig. 4 is a sectional view corresponding to the plane of line 4-4 in Fig. 1, showing a state in which the accommodated optical disc is retained and a shutter is closed.
Fig. 5 is an exploded perspective view showing a disc cartridge relating to a second embodiment of the present invention.
Fig. 6 is a sectional view, of the disc cartridge of Fig. 5, showing a state in which an accommodated optical disc is retained.
Fig. 7 is an exploded perspective view showing a disc cartridge relating to a third embodiment of the present invention.
Fig. 8 is an exploded perspective view showing a disc cartridge relating to a fourth embodiment of the present invention.
Fig. 9 is a perspective view showing an optical disc which is accommodated in a disc cartridge relating to a fifth embodiment of the present invention.
Fig. 10 is a sectional view, of the disc cartridge of Fig. 9, showing a state in which the accommodated optical disc is retained and a shutter is closed.

### DETAILED DESCRIPTION OF THE INVENTION

An embodiment of a disc cartridge of the present invention will be described with reference to the drawings. Note that the Arrows FR, RE, UP and DW in the drawings represent, respectively, a forward direction (loading direction), a rearward direction, an upward direction and a downward direction when looking in a direction of loading (insertion) of the disc cartridge 10 into a drive device.

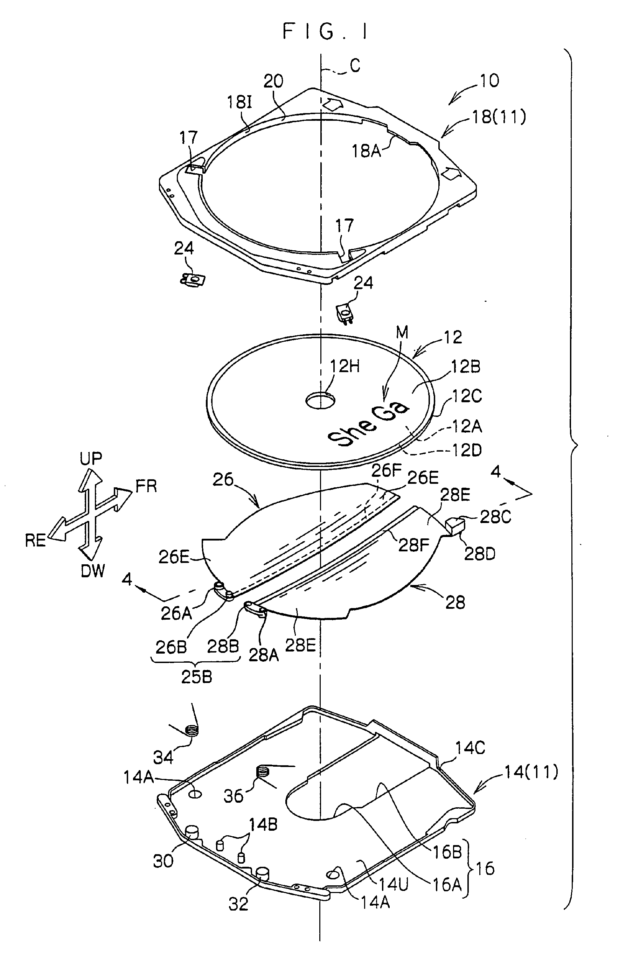

Fig. 1 shows a disc cartridge 10 relating to a first embodiment of the present invention. At the disc cartridge 10, an optical disc 12, which serves as a recording medium, is accommodated in a case 11. The optical disc 12 is formed in a flat, circular disc shape. A center hole 12H is formed at a central portion and a recording surface 12A is provided at one face of the optical disc 12. A face at the opposite side of the optical disc 12 from the recording surface 12A is a label surface 12B which serves as a non-recording face. Text M, images and the like are printed on the label surface 12B. Information is recorded to and replayed from the optical disc 12 by laser light.

As shown in Fig. 1, the case 11 is provided with an upper shell 18 and a lower shell 14. The lower shell 14 is adhered or welded to the upper shell 18 at an outer peripheral portion to form the case 11. The lower shell 14 faces the recording surface 12A of the optical disc 12, with a floor face 14U of the lower shell 14 opposing the recording surface 12A. An aperture portion 16 is formed in the lower shell 14. The aperture portion 16 is structured by a rotation driving aperture portion 16A and a writing/reading aperture portion 16B. The rotation driving aperture portion 16A is concentric with the accommodated optical disc 12 (as shown by the center line C) and has a smaller diameter than the optical disc 12. The writing/reading aperture portion 16B has a substantially rectangular shape which is formed extending frontward (in the direction of arrow FR) continuously from the rotation driving aperture portion 16A.

In a state in which the disc cartridge 10 has been loaded at an unillustrated drive device, an unillustrated rotary driving member of the drive device (for example, a rotating spindle shaft) gains access to the optical disc 12 through the rotation driving aperture portion 16A and is inserted into the center hole 12H, thus making it possible to rotate the optical disc 12. Further, an unillustrated writing/reading member of the drive device (for example, a recording/replaying head) gains access to the optical disc 12 through the writing/reading aperture portion 16B and, by illuminating a laser at the recording surface 12A of the optical disc 12, can implement writing and/or reading of information on the optical disc 12.

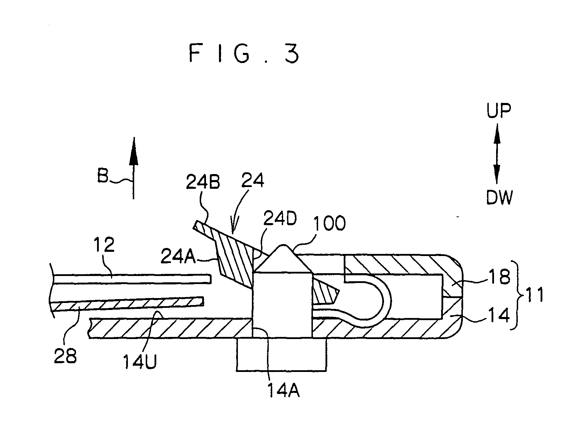

A pair of positioning holes 14A is formed in the lower shell 14. The positioning holes 14A fit onto an unillustrated pair of cartridge positioning pins 100 of the drive device (see Fig. 3) to implement positioning of the disc cartridge 10 relative to the drive device.

A circular disc extraction aperture portion 20 is formed in a face of the upper shell 18 (the upper face in the drawings). A substantially tubular flange 18I is provided at an edge portion of this aperture. It is possible to remove and insert the optical disc 12 through the disc extraction aperture portion 20. When the optical disc 12 is accommodated, the label surface 12B of the optical disc 12 is exposed through the disc extraction aperture portion 20.

A gap of a size that will allow the optical disc 12 to rotate is formed between the flange 18I and an outer peripheral portion 12C of the optical disc 12. The optical disc 12 that is accommodated in the case 11 is disposed such that the label surface 12B faces out of the case 11 through the disc extraction aperture portion 20.

Disc retention members 24, which retain the optical disc 12 at the lower shell 14 or release the optical disc 12, are attached between the upper shell 18 and the lower shell 14. Portions of the disc retention members 24 protrude through cutaway portions 17 of the flange 18I toward the inside of the disc extraction aperture portion 20. Two of the disc retention members 24 are provided in the present embodiment.

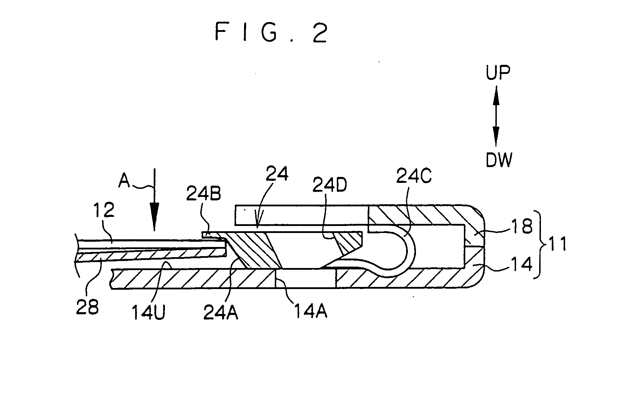

As shown in Fig. 2, each disc retention member 24 is provided with an inclined face 24A, which is angled upward toward the outer periphery of the optical disc 12. A canopy portion 24B is formed at a distal end side of the disc retention member 24 so as to extend over the outer periphery of the optical disc 12. A plate spring 24C, which is bent into a hook shape, is provided at a portion of attachment of the disc retention member 24 to the lower shell 14. The plate spring 24C is sandwiched between the upper shell 18 and the lower shell 14 such that the canopy portion 24B of the disc retention member 24 is urged in a direction for retaining the optical disc (the direction of arrow A). A through-hole 24D is formed in the disc retention member 24. The through-hole 24D passes through the disc retention member 24, at an angle, at a position which is directly above the positioning hole 14A of the lower shell. As shown in Fig. 3, when the cartridge positioning pin 100 of the drive device is inserted into the positioning hole 14A, the cartridge positioning pin 100 fits into the through-hole 24D and lifts up the distal end side of the disc retention member 24 in a direction for releasing the optical disc (the direction of arrow B), rotating the disc retention member 24 in a clockwise direction of the drawing by a cam operation. Further, as shown in Fig. 1, a droppage prevention piece 18A, which protrudes from the disc extraction aperture portion 20, is provided at the forward side (the side in the direction of arrow FR) of the upper shell 18, and extends over an outer peripheral portion of the optical disc 12.

A pair of shutters 26 and 28 (a shutter mechanism) is provided between the recording surface 12A of the disc and the floor face 14U of the lower shell (see Fig. 1). Turning holes 26A and 28A are provided at rearward sides (the sides in the direction of arrow RE) of the shutters 26 and 28. The turning holes 26A and 28A respectively rotatably fit onto a pair of turning shafts 14B, which are formed at the rearward side (the side in the direction of arrow RE) of the lower shell 14. The shutters 26 and 28 are capable, by slidingly turning, of opening and closing the aperture portion 16. The shutters 26 and 28 are urged in directions for closing by shutter springs 34 and 36, into which spring pillars 30 and 32 of the lower shell 14 are inserted.

At a side of the one shutter 28, which side meets up with the other shutter 26 and is at a vicinity of the turning hole 28A, a cam 28B is formed. A follower 26B is formed at the other shutter 26 to correspond with this cam 28B. The cam 28B and the follower 26B are formed so as to mesh with one another, and structure a coupling mechanism 25B which opens and closes the shutters 26 and 28 interlockingly with one another.

A shutter opening/closing operation portion 28C and a locking protrusion portion 28D are formed integrally at the forward side of the one shutter 28. In a state in which the shutter 28 has been closed from outside the disc cartridge 10 by the shutter opening/closing operation portion 28C, the locking protrusion portion 28D, which protrudes downward (in the direction of arrow DW), fits into a locking hole 14C, which is formed at the forward side of the lower shell 14. As a result, the shutter 28 is fixed to the lower shell 14, and the other shutter 26, being interlocked by the coupling mechanism 25B, is also fixed. Herein, step portions are formed at edge portions 26F and 28F, at which the shutters 26 and 28 meet up with one another when the shutters are closed up, making it possible for the edge portions 26F and 28F to be superposed in the vertical direction (the direction of arrows UP and DW).

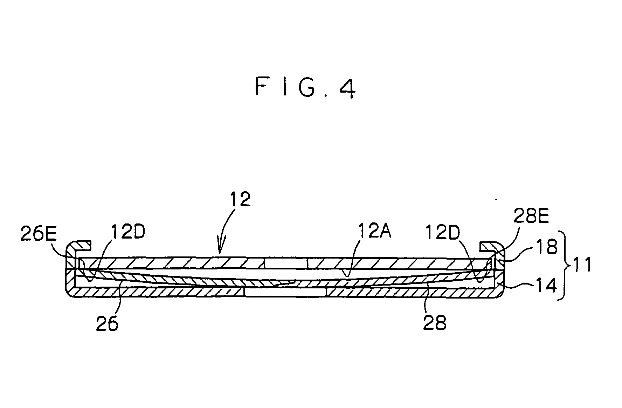

Now refer to Fig. 4. Fig. 4 is a sectional view corresponding to the plane of line 4-4 in Fig. 1, and shows a state in which the accommodated optical disc 12 is retained and the shutters 26 and 28 are closed. As shown in Fig. 4, the shutters 26 and 28 are depressedly formed in a bowl shape whose center is recessed relative to the recording surface 12A of the optical disc 12. Outer peripheral portions 26E and 28E of the shutters 26 and 28 abut against an outer peripheral portion 12D of the recording surface 12A side of the optical disc 12. In other words, the outer peripheral portions 26E and 28E of the shutters 26 and 28 act as a retaining portion for retaining the optical disc 12. Consequently, in the state in which the optical disc 12 is retained, most of the recording surface 12A of the optical disc 12 is not in surface contact with the shutters 26 and 28.

Next, operation of the embodiment described above will be described.

As shown in Fig. 1, the aperture portion 16 is formed in the case 11 to enable irradiation of the laser on the recording surface 12A of the optical disc 12. When the disc cartridge 10 is loaded at an unillustrated drive device, this aperture portion 16 is opened/closed by the shutters 26 and 28 sliding.

On the other hand, when the disc cartridge 10 is not in use, the disc retention members 24 press the optical disc 12 against the shutters 26 and 28 and retain the optical disc 12, as shown in Fig. 2. Here, as shown in Fig. 4, the shutters 26 and 28 are depressedly formed in the bowl shape whose center is recessed with respect to the recording surface 12A of the optical disc 12. Therefore, rather than the whole of the recording surface 12A of the optical disc 12 making surface contact at times of retention of the optical disc 12, the outer peripheral portion 12D of the optical disc 12 (which portion is not used as a recording region) alone makes contact with the outer peripheral portions 26E and 28E of the shutters 26 and 28. Consequently, most of the recording surface 12A are in a non-contact state, and damage to the recording surface 12A can be avoided.

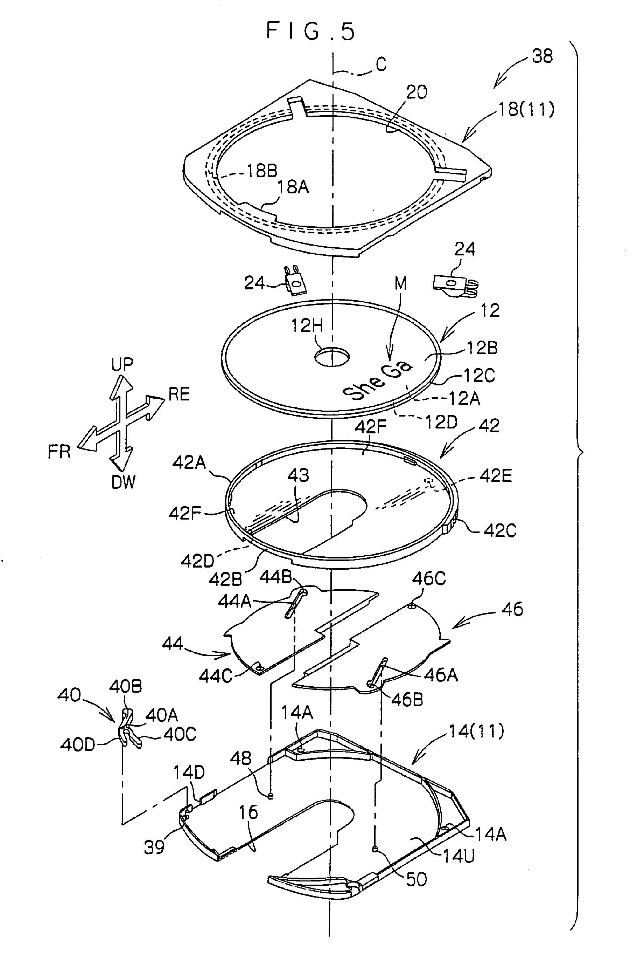

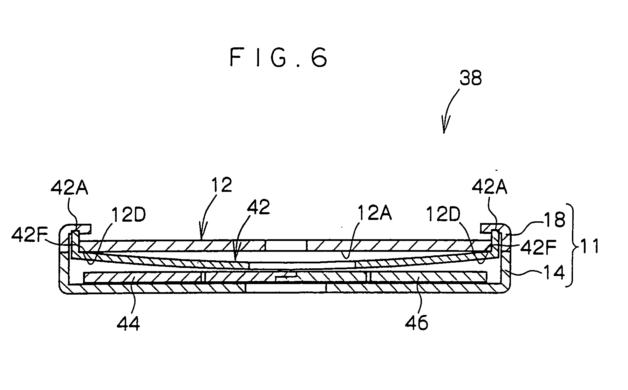

Next, a second embodiment of the present invention will be described with reference to Figs. 5 and 6. As shown in Fig. 4, the first embodiment has a structure in which the outer peripheral portions 26E and 28E of the shutters 26 and 28 abut against the outer peripheral portion 12D of the optical disc 12. However, in a disc cartridge 38 of the present embodiment, an inner rotor 42 is provided for opening and closing shutters 44 and 46. This inner rotor 42 is depressedly formed in a bowl shape whose center is recessed relative to the recording surface 12A of the optical disc 12. That is, the second embodiment has a structure in which an outer peripheral portion 42F of the inner rotor 42 abuts against the outer peripheral portion 12D of the optical disc 12, as shown in Figs. 5 and 6. Note that structural elements that are the same as in the first embodiment are assigned the same reference numerals, and descriptions thereof are omitted.

As shown in Fig. 5, a support shaft 39 is provided protruding from one comer portion at the forward side of the lower shell 14 (the side in the direction of arrow FR). A locking member 40 is supported at this support shaft 39. When the inner rotor 42 (a shutter mechanism), which is described later, is at a closing position for closing the aperture portion 16 of the lower shell 14, the locking member 40 locks rotation of the inner rotor 42. The locking member 40 is provided with an engaging hole 40A, which rotatably engages with the support shaft 39. Thus, the locking member 40 is rotatably supported at the support shaft 39. An operation piece 40B is formed extending from the engaging hole 40A toward a face of one side of the lower shell 14. The operation piece 40B faces out of the lower shell 14 through a locking aperture portion 14D, which is formed in the one side face of the lower shell 14. Further, a stopper piece 40C is formed extending from the engaging hole 40A toward a region of accommodation of the optical disc 12, and can slide against a ring portion 42A of the inner rotor 42. Furthermore, a spring piece 40D is formed extending from the engaging hole 40A toward an inside face at the forward side of the lower shell 14. This spring piece 40D abuts against the inside face of the forward face side of the lower shell 14, in a resiliently deformed state.

The operation piece 40B is urged in a direction for protruding from the locking aperture portion 14D by a resilient force of the spring piece 40D. Further, the stopper piece 40C is urged in a direction for abutting against the ring portion 42A of the inner rotor 42, and locks the inner rotor 42. When the operation piece 40B is pressed from outside the disc cartridge 38, the stopper piece 40C moves in a direction for moving away from the ring portion 42A of the inner rotor 42, against the urging force of the spring piece 40D, and the locking of the inner rotor 42 is released.

A pair of guide protrusions 48 and 50 are formed protruding from the floor face 14U of the lower shell 14. Cam grooves 44A and 46A, which engage with, respectively, the guide protrusions 48 and 50, are formed at the shutters 44 and 46 (the shutter mechanism). The cam grooves 44A and 46A are formed with predetermined lengths, such that the shutters 44 and 46 swing between positions for closing the aperture portion 16 and positions for opening the aperture portion 16. An aperture portion 43 of the inner rotor 42 and the aperture portion 16 of the lower shell 14 are opened and closed by sliding of these shutters 44 and 46. Engaging portions 44B and 46B are formed at outer periphery end portions of the cam grooves 44A and 46A. These engaging portions 44B and 46B engage with the guide protrusions 48 and 50 of the lower shell 14 when the shutters 44 and 46 are at the closing positions. Engaging holes 44C and 46C are also formed, at end portions of the shutters 44 and 46.

The substantially circular disc-form 42 is disposed between the optical disc recording surface 12A and the pair of shutters 44 and 46. The substantially annular ring portion 42A is provided standing upward (in the direction of arrow UP) at an outer peripheral edge portion of the inner rotor 42, and is engaged with a guide groove 18B, which is formed around the disc extraction aperture portion 20 in a lower face of the upper shell 18. Thus, the inner rotor 42 is made rotatable relative to the case 11. The aperture portion 43 (a second aperture portion) is formed in the inner rotor 42 with substantially the same size as the aperture portion 16 (a first aperture portion) that is formed in the lower shell 14. A continuous portion 42B of the ring portion 42A bridges across an opening portion at an outer periphery side of the aperture portion 43.

A gear portion 42C is formed at an outer peripheral face of the ring portion 42A. The inner rotor 42 can be rotated by the gear portion 42C being moved. A pair of support shafts 42D and 42E are formed protruding from a lower face of the inner rotor 42. The pair of support shafts 42D and 42E is disposed at positions with point symmetry with one another relative to a central portion of the inner rotor 42. The pair of support shafts 42D and 42E engage with the engaging holes 44C and 46C of the shutters 44 and 46. The pair of shutters 44 and 46 are supported to be swingable about the support shafts 42D and 42E, and slide while rotating together with the inner rotor 42.

As shown in Fig. 6, the inner rotor 42 is depressedly formed in a bowl shape whose center is recessed relative to the recording surface 12A of the optical disc 12. The outer peripheral portion 42F, which is a little to an inner side relative to the ring portion 42A of the inner rotor 42, abuts against the outer peripheral portion 12D of the recording surface 12A of the optical disc 12. In other words, the outer peripheral portion 42F of the inner rotor 42 acts as a retention portion for retaining the optical disc 12. Therefore, in the state in which the optical disc 12 is retained, most of the recording surface 12A of the optical disc 12 is not in surface contact with the inner rotor 42.

Next, operation of the embodiment described above will be described.

As shown in Fig. 5, the shutters 44 and 46 are supported to be swingable by the support shafts 42D and 42E to the inner rotor 42, to open and close the aperture portion 16 (the first aperture portion) and the aperture portion 43 formed in the inner rotor 42 (the second aperture portion). That is, when the disc cartridge 38 is loaded at an unillustrated drive device, the gear portion 42C meshes with an operation portion of the drive device, the inner rotor 42 is rotated, and the support shafts 42D and 42E are moved. As a result, the shutters 44 and 46 are guided by the cam grooves 44A and 46A, which are engaged with the guide protrusions 48 and 50 of the lower shell 14, and swing around the support shafts 42D and 42E to open/close the aperture portion 16 and the aperture portion 43.

On the other hand, when the disc cartridge 38 is not in use, the disc retention members 24 press the optical disc 12 against the inner rotor 42 and retain the optical disc 12. As mentioned above, the inner rotor 42 is depressedly formed in the bowl shape whose center is recessed with respect to the recording surface 12A of the optical disc 12 (see Fig. 6). Therefore, rather than the whole of the recording surface 12A of the optical disc 12 making surface contact at times of retention of the optical disc 12, the outer peripheral portion 12D of the optical disc 12 alone makes contact with the outer peripheral portion 42F of the inner rotor 42. Consequently, most of the recording surface 12A is in the non-contact state, and damage to the recording surface 12A can be avoided.

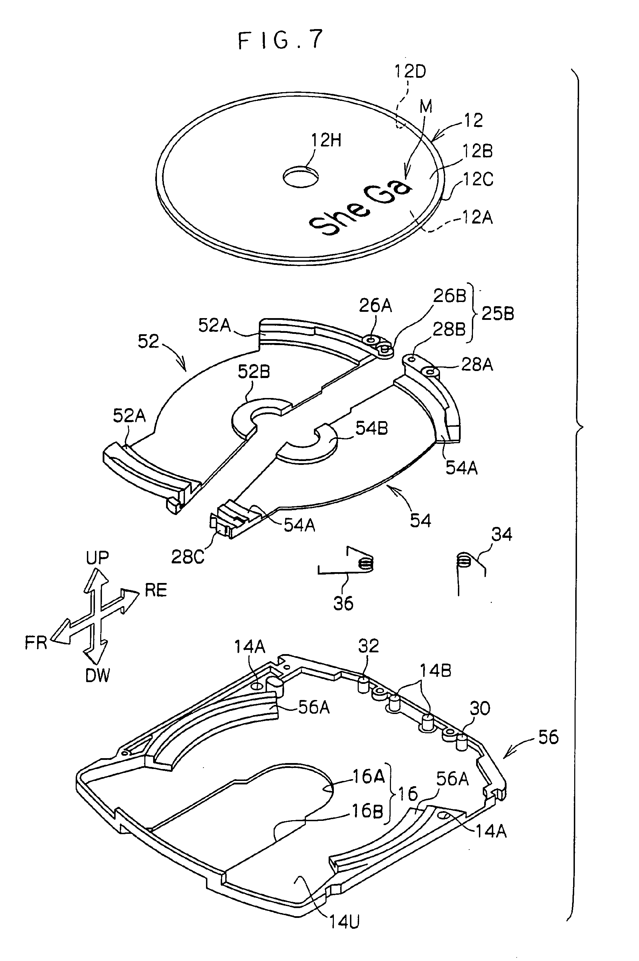

Next, a third embodiment of the present invention will be described with reference to Fig. 7. In a disc cartridge of the present embodiment, protrusion portions 52A, 52B, 54A, 54B and 56A are formed at shutters 52 and 54 and a lower shell 56, to oppose non-recording regions at the outer peripheral portion 12D and an outer periphery portion of the center hole 12H of the optical disc 12. That is, the third embodiment has a structure in which the protrusion portions 52A, 52B, 54A, 54B and 56A are formed at the shutters 52 and 54 and the lower shell 56 and, at times of retention of the optical disc, abut against the non-recording regions at the outer peripheral portion 12D and the outer periphery portion of the center hole 12H of the optical disc 12. Note that structural elements that are the same as in the embodiments described above are assigned the same reference numerals, and descriptions thereof are omitted. Furthermore, for convenience of representation, the upper shell 18 and the disc retention member 24 are not shown in Fig. 7.

As shown in Fig. 7, the protrusion portions 56A, which have circular arc forms in plan view, are formed at both left and right sides relative to the direction of insertion (the direction of arrow FR) at outer peripheral portions of the floor face 14U of the lower shell 56. These protrusion portions 56A are formed in a range which will not interfere with sliding of the shutters 52 and 54. The protrusion portions 56A support the outer peripheral portion 12D of the optical disc 12 at times of retention of the optical disc 12.

The protrusion portions 52A and 54A are formed in circular arc forms in plan view at outer peripheral portions of the pair of shutters 52 and 54, and support the outer peripheral portion 12D of the optical disc 12 at times of retention of the optical disc 12. In other words, the protrusion portions 52A and 54A act as retention portions which retain the optical disc 12. The protrusion portions 52B and 54B are formed in circular arc forms in plan view at a central portion of the shutters 52 and 54. When the shutters 52 and 54 close up, the protrusion portions 52B and 54B join up to form an annular shape in plan view. These protrusion portions 52B and 54B act as retention portions which support a non-recording region, which is the outer periphery portion of the center hole 12H, of the optical disc 12 at times of retention of the optical disc 12.

Thus, at times of retention of the optical disc 12, the protrusion portions 52A and 54A of the shutters 52 and 54 and the protrusion portions 56A of the lower shell 56 support the outer peripheral portion 12D of the optical disc 12, and the protrusion portions 52B and 54B of the shutters 52 and 54 support the outer periphery portion of the center hole 12H. Therefore, most of the recording surface 12A (in particular, a recording region thereof) is in the non-contact state, and damage to the recording surface 12A can be prevented.

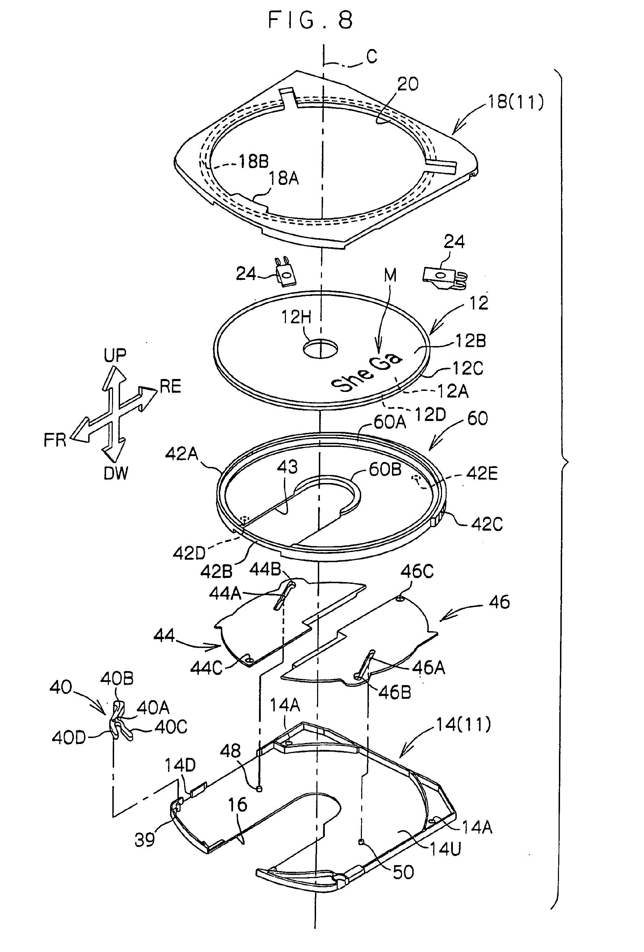

Next, a fourth embodiment of the present invention will be described with reference to Fig. 8. In a disc cartridge of the present embodiment, protrusion portions 60A and 60B are formed at an inner rotor 60, to oppose the non-recording regions at the outer peripheral portion 12D and the outer periphery portion of the center hole 12H of the optical disc 12. That is, the fourth embodiment has a structure in which the protrusion portions 60A and 60B are formed at the inner rotor 60, as shown in Fig. 8, and abut against the non-recording regions at the outer peripheral portion 12D and the outer periphery portion of the center hole 12H of the optical disc 12 at optical disc retention times. Note that structural elements that are the same as in the embodiments described above are assigned the same reference numerals, and descriptions thereof are omitted.

As shown in Fig. 8, a protrusion portion 60A is formed at an outer peripheral portion which is a little to the inner side relative to the ring portion 42A of the inner rotor 60. This protrusion portion 60A supports the outer peripheral portion 12D of the optical disc 12 at times of retention of the optical disc 12. In other words, the protrusion portion 60A acts as a retention portion which retains the optical disc 12. A protrusion portion 60B is formed at a central portion of the inner rotor 60, along a circular arc portion of the aperture portion 43. This protrusion portion 60B acts as a retention portion which supports the outer periphery portion (which is a non-recording region in the present embodiment) of the center hole 12H at times of retention of the optical disc 12.

Thus, in the state in which the optical disc 12 is retained at times of non-use of the disc cartridge, rather than the whole of the recording surface 12A of the optical disc 12 making surface contact, the outer peripheral portion 12D and the outer periphery portion of the center hole 12H of the optical disc 12 are supported at the protrusion portions 60A and 60B. Consequently, most of the recording surface 12A is in the non-contact state, and damage to the recording surface 12A can be prevented.

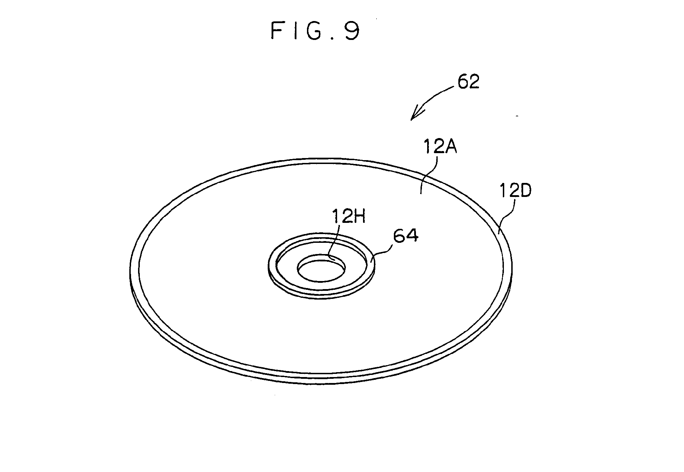

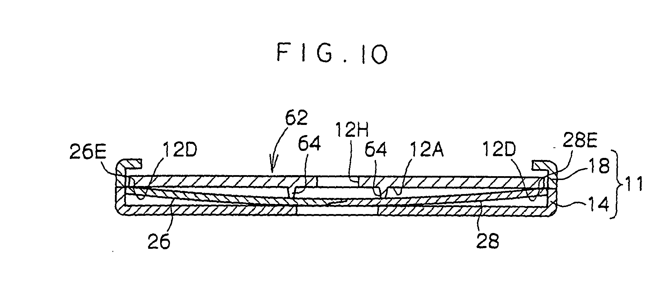

Next, a fifth embodiment of the present invention will be described with reference to Figs. 9 and 10. In a disc cartridge of the present embodiment, a protrusion-form stack rib 64 is formed at the recording surface 12A of an optical disc 62, at a non-recording region of the outer periphery portion of the center hole 12H. That is, the fifth embodiment has a structure in which the recording surface 12A of the optical disc 62 features the protrusion-form stack rib 64 at the non-recording region of the outer periphery portion of the center hole 12H. Note that structural elements that are the same as in the embodiments described above are assigned the same reference numerals, and descriptions thereof are omitted.

Fig. 9 shows a perspective view of the optical disc 62, which is accommodated in the disc cartridge relating to the present embodiment, as viewed from the recording surface 12A side thereof. As is shown in Fig. 9, the protrusion-form stack rib 64 is formed at the non-recording region of the outer periphery portion of the center hole 12H.

As shown in Fig. 10, in the state in which the optical disc 62 is retained at times of non-use of the disc cartridge, the stack rib 64 of the optical disc 62 makes contact with the shutters 26 and 28. Therefore, even if the optical disc 62 is warped in the same direction as the shutters 26 and 28 to some extent, the recording region of the recording surface 12A can be maintained in the non-contact state, and damage to the recording region of the recording surface 12A can be avoided. Furthermore, ingression of dust through the center hole 12H can be prevented by the provision of the stack rib 64 at the optical disc 62.

In Fig. 10, the shutters 26 and 28 are depressedly formed in a bowl shape whose center is recessed relative to the recording surface 12A of the optical disc 62. However, the shutters 26 and 28 may have flat plate forms. Further, an inner rotor or the like may be provided in addition to the shutters 26 and 28, and the optical disc 62 shown in Fig. 9 could be accommodated in a disc cartridge with a structure substantially the same as in, for example, the second embodiment. In such a case, the inner rotor 42 might have a flat plate form.

Now, cases in which the optical disc 12 has a flat plate form have been described for the first to fourth embodiments and a case in which the stack rib 64 is formed at the recording surface 12A of the optical disc 62 has been described for the fifth embodiment. However, in any of these embodiments, the recording surface 12A of the optical disc 12 or 62 may be curved in a recessed form along radial directions from the center thereof, to an extent which is compatible with specifications. In such a case, in the state in which the optical disc 12 or 62 is retained at times of non-use of the disc cartridge, rather than substantially the whole of the recording surface 12A of the optical disc 12 or 62 making surface contact with the shutters 26 and 28, shutters 52 and 54 or the like (or in a case in which another member is provided between the optical disc and the shutters, such as, for example, the inner rotor 42 or 60 or the like, surface contact with that other member), the outer peripheral portion 12D of the optical disc 12 or 62 makes contact. Consequently, most of the recording surface 12A will be in the non-contact state, and damage to the recording surface 12A can be prevented. This is also applicable when the shutters 26 and 28 or the like, or the inner rotor 42 or the like, have flat plate forms.

Further, the lower shell 14 may be depressedly formed in a bowl shape whose center is recessed relative to the recording surface 12A of the optical disc 12 or 62, with an outer peripheral portion of the lower shell 14 abutting against the outer peripheral portion 12D of the optical disc 12 or 62 in the state in which the optical disc 12 or 62 is retained.

As has been described above, according to a disc cartridge of the present invention, damage to a recording face of a disc can be prevented.

## Claims

1. A disc cartridge which is loadable at a drive device and which accommodates a disc at which information is at least one of replayed and recorded by laser light of the drive device, the disc cartridge comprising:
a case which rotatably accommodates the disc, an aperture for extraction of the disc being formed in the case, and the case including an aperture portion which enables irradiation of the laser light on a recording face of the disc;
a shutter disposed to face the recording face of the disc in the case, the shutter sliding to open and close the aperture portion; and
a disc retention member which pushes the disc against the shutter for retaining the disc,
wherein the shutter is formed such that a center thereof includes a recessed form relative to the recording face of the disc.

2. The disc cartridge of claim 1, wherein the recording face of the disc is curved in a recessed form along radial directions from a center thereof.

3. The disc cartridge of claim 1, wherein the disc includes a center hole at a central portion thereof, and the recording face of the disc includes a protrusion-form stack rib at a non-recording region at an outer periphery portion of the center hole.

4. The disc cartridge of claim 1, wherein the case is formed by an upper shell and a lower shell, and an outer edge portion of the inside of the lower shell includes a retention portion for supporting an outer peripheral portion of the disc.

5. The disc cartridge of claim 1, wherein an outer peripheral portion of the shutter includes a retention portion for retaining an outer peripheral portion of the disc.

6. The disc cartridge of claim 5, wherein the disc includes a center hole at a central portion thereof, and the shutter further includes a retention portion at a central portion thereof, the retention portion supporting an outer periphery portion of the center hole of the disc.

7. The disc cartridge of claim 6, wherein the retention portion is formed by a protrusion portion.

8. A disc cartridge which is loadable at a drive device and which accommodates a disc at which information is at least one of replayed and recorded by laser light of the drive device, the disc cartridge comprising:
a case which rotatably accommodates the disc, an aperture for extraction of the disc being formed in the case, and the case including a first aperture portion which enables irradiation of the laser light on a recording face of the disc;
an inner rotor rotatably accommodated in the case, a second aperture portion with substantially the same size as the first aperture portion being formed in the inner rotor;
a shutter which is supported to be swingable at a shaft from the inner rotor for opening and closing the first aperture portion and the second aperture portion;
a cam groove formed in the shutter;
a guide protrusion formed at a floor face of the case, the guide protrusion engaging with the cam groove, and the shutter being swung around the shaft by an operation of rotation of the inner rotor; and
a disc retention member which pushes the disc against the inner rotor for retaining the disc,
wherein the inner rotor is formed such that a center thereof includes a recessed form relative to the recording face of the disc.

9. The disc cartridge of claim 8, wherein the recording face of the disc is curved in a recessed form along radial directions from a center thereof.

10. The disc cartridge of claim 8, wherein the disc includes a center hole at a central portion thereof, and the recording face of the disc includes a protrusion-form stack rib at a non-recording region at an outer periphery portion of the center hole.

11. The disc cartridge of claim 8, wherein an outer peripheral portion of the inner rotor includes a retention portion for retaining an outer peripheral portion of the disc.

12. The disc cartridge of claim 11, wherein the disc includes a center hole at a central portion thereof, and the inner rotor further includes a retention portion at a central portion thereof, the retention portion supporting an outer periphery portion of the center hole of the disc.

13. The disc cartridge of claim 12, wherein the retention portion is formed by a protrusion portion.

14. A disc cartridge which is loadable at a drive device and which accommodates a disc at which information is at least one of replayed and recorded by laser light of the drive device, the disc cartridge comprising:
a case which rotatably accommodates the disc, an aperture for extraction of the disc being formed in the case, and the case including a first aperture portion which enables irradiation of the laser light on a recording face of the disc;
a shutter mechanism disposed to face the recording face of the disc in the case, the shutter mechanism opening and closing the first aperture portion; and
a disc retention member which pushes the disc against the shutter mechanism for retaining the disc,
wherein the shutter mechanism is formed such that a central portion thereof is spaced apart from the recording face of the disc.

15. The disc cartridge of claim 14, wherein the disc includes a center hole at a central portion thereof, and the recording face of the disc includes a protrusion-form stack rib at a non-recording region at an outer periphery portion of the center hole.

16. The disc cartridge of claim 14, wherein the shutter mechanism comprises a shutter, an outer peripheral portion of the shutter includes a retention portion which retains an outer peripheral portion of the disc, and the disc is retained by the outer peripheral portion of the disc abutting against the retention portion.

17. The disc cartridge of claim 14, wherein the shutter mechanism comprises a shutter, and the shutter is formed such that a center thereof includes a recessed form relative to the recording face of the disc.

18. The disc cartridge of claim 14, wherein the shutter mechanism comprises an inner rotor including a second aperture portion, an outer peripheral portion of the inner rotor includes a retention portion which retains an outer peripheral portion of the disc, and the disc is retained by the outer peripheral portion of the disc abutting against the retention portion.

19. The disc cartridge of claim 14, wherein the shutter mechanism comprises an inner rotor including a second aperture portion, and the inner rotor is formed such that a center thereof includes a recessed form relative to the recording face of the disc.

20. A method for retaining a disc in a disc cartridge that includes:
a case which is loadable at a drive device, rotatably accommodates the disc, at which disc information is at least one of replayed and recorded by laser light of the drive device, and includes an aperture portion which enables irradiation of the laser light on a recording face of the disc;
a shutter mechanism disposed to face the recording face of the disc in the case, the shutter mechanism opening and closing the aperture portion; and
a disc retention member which pushes the disc against the shutter mechanism for retaining the disc, the method comprising:
closing the aperture portion with the shutter mechanism; and
abutting an outer peripheral portion of the shutter mechanism against an outer peripheral portion of the disc for retaining the disc.
